# EUROPÄISCHE PATENTSCHRIFT

(11) **EP 2 848 163 B1**
(45) Veröffentlichungstag und Bekanntmachung des Hinweises auf die Patenterteilung: **05.09.2018**
(21) Anmeldenummer: 13184748.5
(22) Anmeldetag: 17.09.2013
(51) Int. Cl.: A47F 9/04, G07G 1/00, G06Q 20/20

(54) **Automatisches Kassensystem mit Bewegungsablaufsteuerung**
Automatic checkout system with motion pattern control
Système de caisse automatique avec commande du déroulement d'un mouvement

(43) Veröffentlichungstag der Anmeldung: 18.03.2015
(73) Patentinhaber: Wincor Nixdorf International GmbH, 33106 Paderborn (DE)
(72) Erfinder: Klein, Gordon, 14624 Dallgow (DE)

(56) Entgegenhaltungen:
- EP-A1- 0 897 105
- EP-A2- 0 940 786
- DE-U1- 9 421 810
- US-A- 5 083 638
- US-A1- 2008 005 036

## Beschreibung

Die Erfindung betrifft ein Kassensystem, das einen Scanner zum Erfassen von ausgewählten Waren durch eine Bedienperson des Kassensystems und eine Ablageeinheit zur Ablage von erfassten Waren umfasst.

Bei bekannten Selbstbedienungskassensystemen führen die Kunden die von ihnen ausgesuchten Waren nach und nach einzeln über einen Scanner, über den der Strichcode der Waren erfasst wird. Anschließend müssen die erfassten Waren von den Kunden in Tüten abgelegt werden, bevor die Waren mit Hilfe einer Waage gewogen werden. Auf diese Weise kann immer das Gewicht eines neuen zugefügten Artikels bestimmt werden und hierüber mit Hilfe einer Gewichtsdatenbank überprüft werden, ob der der Tüte zugeführte Artikel mit dem über den Scanner erfassten Artikel übereinstimmt. Möchte der Kunde bestimmte Kassenfunktionen, beispielsweise die Stornierung eines bereits gescannten Artikels, vornehmen, so muss er dies bei bekannten Kassensystemen über entsprechende Bedienelemente, beispielsweise einen Touchscreen, manuell eingeben. Häufig sind die Eingabeeinheiten solcher Kassenfunktionen für den Kunden aufwendig und nur schwer nachvollziehbar. Darüber hinaus kann es zu Problemen kommen, wenn der Kunde nicht die zur Bedienung des Kassensystems vorgesehene Schrittreihenfolge einhält, indem er zum Beispiel bereits gescannte Waren wieder aus den Tüten entnimmt. In diesem Fall fordert das Kassensystem in der Regel den Kunden auf, den Artikel wieder zurückzulegen, bevor er dann mit dem Scannen fortfahren kann.

Aus dem Dokument DE 10 2004 046 597 A1 ist ein Kassensystem bekannt, bei dem Waren mit Hilfe eines Transportbandes transportiert werden. Um eine unberechtigte Entnahme von Waren von dem Band zu verhindern, ist eine sogenannte Lichtvorhand aus Lichtschranken vorgesehen.

Das Dokument DE 36 19 362 A2 beschreibt die Überprüfung des Vorhandenseins von Waren mit Hilfe von Lichtschranken.

Aus dem Dokument EP 0 940 786 A2 ist ein Kassensystem bekannt, bei dem die Bewegung des Kunden mit Hilfe einer Kamera überwacht wird. Diese Kameraüberwachung dient zur Steigerung der Sicherheit, damit ein Kunde Waren nicht stehlen kann.

Weitere Kassensysteme sind aus den Dokumenten EP 0 897 105 A1, DE 94 21 810 U1, US 5,083,638 A und US 2008/005036 A1 bekannt.

Es ist Aufgabe der Erfindung, ein Kassensystem anzugeben, das ein hohes Maß an Sicherheit bietet und das von dem Kunden einfach und komfortabel bedient werden kann.

Diese Aufgabe wird durch ein Kassensystem mit den Merkmalen des Anspruchs 1 gelöst. Vorteilhafte Weiterbildungen der Erfindung sind in den abhängigen Ansprüchen angegeben.

Erfindungsgemäß umfasst das Kassensystem eine Sensoreinheit zum Erfassen eines Bewegungsablaufes der Bedienperson. Eine Steuereinheit des Kassensystems wählt in Abhängigkeit des mit Hilfe der Sensoreinheit erfassten Bewegungsablaufes eine von mehreren voreingestellten Kassenfunktionen aus und steuert das Kassensystem derart an, dass dieses die ausgewählte Kassenfunktion ausführt.

Hierdurch wird erreicht, dass das Kassensystem von der Bedienperson intuitiv gesteuert werden kann. Insbesondere müssen die Kassenfunktionen nicht über Bedienelemente von dem Kunden eingegeben werden. Ferner ermöglicht das Erfassen des Bewegungsablaufs des Kunden und die darauf beruhende automatische Ansteuerung des Kassensystems, dass Betrugsversuchen vorgebeugt wird, da der Ablauf des Erfassens der Waren nicht allein durch von dem Kunden getätigte Eingaben, die eventuell tatsächlichen Handlungen widersprechen, gesteuert ist, sondern aufgrund seiner tatsächlich durchgeführten Handlung erfolgt.

Bei einer besonders bevorzugten Ausführungsform ist in einem Speicherelement der Steuereinheit eine Vielzahl möglicher Bewegungsabläufe gespeichert, wobei jedem dieser möglichen Bewegungsabläufe eine Kassenfunktion eindeutig zugeordnet ist. Die Steuereinheit vergleicht den mit Hilfe der Sensoreinheit ermittelten Bewegungsablauf mit den gespeicherten möglichen Bewegungsabläufen und wählt in Abhängigkeit des Ergebnisses dieses Vergleichs die Kassenfunktion aus, die anschließend vom Kassensystem ausgeführt wird. Insbesondere wählt die Steuereinheit denjenigen der möglichen Bewegungsabläufe aus, der dem ermittelten Bewegungsablauf am ähnlichsten ist.

Die Sensoreinheit kann beispielsweise eine Kamera zur Aufnahme eines Bildes eines Bedienbereichs des Kassensystems umfassen. Mit Hilfe der Kamera wird insbesondere ein Bild dieses Bedienbereichs aufgenommen, das von der Steuereinheit mit Hilfe von hinterlegten Bildverarbeitungsprogrammen derart ausgewertet wird, dass der Bewegungsablauf der Bedienperson ermittelt werden kann. Insbesondere wird eine Bildfolge mehrerer Bilder aufgenommen, in Abhängigkeit derer dann der Bewegungsablauf der Bedienperson bestimmt wird.

Zusätzlich oder alternativ zu der Kamera kann die Sensoreinheit auch eine Wärmebildkamera zur Aufnahme, eines Wärmebildes des Bedienbereichs des Kassensystems umfassen. In Abhängigkeit des aufgenommenen Wärmebildes wird dann insbesondere der Bewegungsablauf ermittelt. Auch hier erfolgt vorzugsweise wiederum eine Aufnahme einer Bildfolge von Wärmebildern.

Die Steuereinheit klassifiziert mit Hilfe des Wärmebildes insbesondere erfasste Gegenstände in Körperteile der Bedienperson und andere Gegenstände. Somit kann insbesondere zwischen Körperteilen und Waren unterschieden werden, sodass eine genaue Ermittlung des Bewegungsablaufes und der beabsichtigten Handlung der Bedienperson erfolgen kann.

Der Bedienbereich umfasst insbesondere den Scanner und die Ablageeinheit. Bei einer besonders bevorzugten Ausführungsform umfasst der Bedienbereich, der von der Kamera erfasst wird, den gesamten oberen Bereich des Kassentisches, d. h. den gesamten Bereich, in dem von der Bedienperson Waren gehandhabt werden. Erfindungsgemäß umfasst die Sensoreinheit mindestens eine Lichtschranke zum Erfassen von dem Bewegungsablauf der Bedienperson. Mit Hilfe der Lichtschranke kann insbesondere erfasst werden, wann Waren von wo nach wo bewegt werden. Insbesondere ist eine Vielzahl von Lichtschranken vorgesehen, um ein besonders genaues Umfassen des Bewegungsablaufs zu ermöglichen. Erfindungsgemäß ist die mindestens eine Lichtschranke als Doppellichtschrankenanordnung ausgebildet. Unter einer Doppellichtschranke wird verstanden, dass zwei parallel zueinander verlaufende Lichtschranken vorgesehen sind, d.h. dass die Lichtstrahlen dieser Lichtschranken in einem vorbestimmten Abstand zueinander parallel verlaufen. Die Verwendung solcher Doppellichtschranken hat den Vorteil, dass die Bewegungsrichtung einer Bewegung ermittelt werden kann, in dem erfasst wird, welche der beiden Lichtschranken der Doppellichtschranke zuerst unterbrochen wird. Erfindungsgemäß ist der Scanner durch eine erste Doppellichtschrankenanordnung umgeben, die ein erstes Feld umschließt, in dem zumindest der Scanner angeordnet ist. Ebenso ist die Ablageeinheit durch eine zweite Doppellichtschrankenanordnung umschlossen, die ein zweites Feld umschließt, in dem zumindest die Ablageeinheit angeordnet ist. Durch diese beiden Felder kann der Bewegungsablauf und somit der Warenfluss auf besonders einfache Weise sicher erfasst werden. Insbesondere kann mit Hilfe der Doppellichtschranken ein Zuführen und Entnehmen von Waren aus den beiden Feldern ermittelt werden, wobei in Abhängigkeit der Zuführ- und Entnahmereihenfolge ein Bewegungsablauf ermittelt werden kann. Wird z. B. eine Ware zunächst dem ersten Feld zugeführt und dort gescannt und anschließend dem zweiten Feld zugeführt, also in der Ablageeinheit abgelegt, so wird dies als ein planmäßiges Erfassen der Ware aufgefasst, sofern diese anschließend nicht wieder aus dem zweiten Feld entnommen wird. Wird dagegen eine Ware im ersten Feld erfasst und nicht weiter in das zweite Feld, also die Ablageeinheit bewegt, sondern in einer anderen Richtung aus dem ersten Feld hinausbewegt, wird dies von dem Kassensystem als eine Stornierung der erfassten Ware aufgefasst. Ebenso kann ein Entnehmen einer bereits erfassten und abgelegten Ware aus dem zweiten Feld als eine Stornierung dieser Ware aufgefasst werden.

Bei einer besonders bevorzugten Ausführungsform sind sowohl die Doppellichtschrankenanordnungen als auch eine Wärmebildkamera vorgesehen. Dies ermöglicht es zu erkennen, ob die über die Doppellichtschrankenanordnungen erfassten Bewegungen jeweils nur durch ein Körperteil der Bedienperson ausgelöst werden oder ob zusätzlich eine Warenbewegung erfolgt.

Zusätzlich kann die Sensoreinheit einer Waage zur Ermittlung des Gewichtes der in der Ablageeinheit aufgenommenen Waren umfassen. Somit kann sehr genau überprüft werden, ob der mit Hilfe des Scanners erfassten Ware mit der in der Ablageeinheit abgelegten Ware übereinstimmt. Zusätzlich kann dies auch über die beiden Felder sichergestellt werden, da das Hinzuführen einer anderen Ware oder das Entnehmen der gescannten Ware ebenfalls über diese ermittelt werden könnte.

Die Waage, die zur Ermittlung des Gewichtes der in der Ablageeinheit aufgenommenen Waren dient, dient insbesondere auch als sogenannte Fruchtwage, mit deren Hilfe das Gewicht von Waren mit gewichtsabhängigen Preisen ermittelt wird. Dies hat den Vorteil, dass nur eine Waage verwendet werden muss.

Ferner ist es vorteilhaft, wenn das Kassensystem ein Kundenführungssystem zur Führung des Bewegungsablaufes einer Bedienperson umfasst. Mit Hilfe des Kundenführungssystems kann dem Kunden dargestellt werden, welche nächsten Schritte er durchführen kann, und welche Konsequenzen, also welche Kassenfunktion, dies auslösen würde.

Das Kundeführungssystem umfasst insbesondere einen Bildschirm zur Anzeige von Informationen. Über den Bildschirm kann der Kunde beispielsweise aufgefordert werden, eine erfasste Ware in die Ablageeinheit abzulegen. Bei dem Bildschirm handelt es sich vorzugsweise um einen Touchscreen, über den von den Kunden auch Bedienbefehle, beispielsweise der Abschluss der Warenerfassung und die gewünschte Bezahlung, eingegeben werden können.

Zusätzlich oder alternativ kann das Kundenführungssystem auch wahlweise beleuchtbare Symbole, beispielsweise Pfeile, Schriftzeichen oder Linien umfassen, mit denen der Bedienperson mögliche Bewegungsalternativen angezeigt werden können. Beispielsweise kann mit Hilfe von Pfeilen der Bedienperson angedeutet werden, dass sie eine erfasste Ware in der Ablageeinheit ablegen soll.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische, perspektivische Darstellung eines Kassensystems;
- Figur 2: eine Draufsicht auf das Kassensystem nach Figur 1;
- Figur 3: eine weitere Draufsicht auf das Kassensystem nach den Figuren 1 und 2;
- Figur 4: eine Draufsicht auf das Kassensystem nach den Figuren 1 bis 3 in einem ersten Betriebszustand;
- Figur 5: eine Draufsicht auf das Kassensystem nach den Figuren 1 bis 3 in einem zweiten Betriebszustand;
- Figur 6: eine Draufsicht auf das Kassensystem nach den Figuren 1 bis 3 in einem dritten Betriebszustand;
- Figur 7: eine Draufsicht auf das Kassensystem nach den Figuren 1 bis 3 in einem vierten Betriebszustand; und
- Figur 8: eine Draufsicht auf das Kassensystem nach den Figuren 1 bis 3 in einem fünften Betriebszustand.

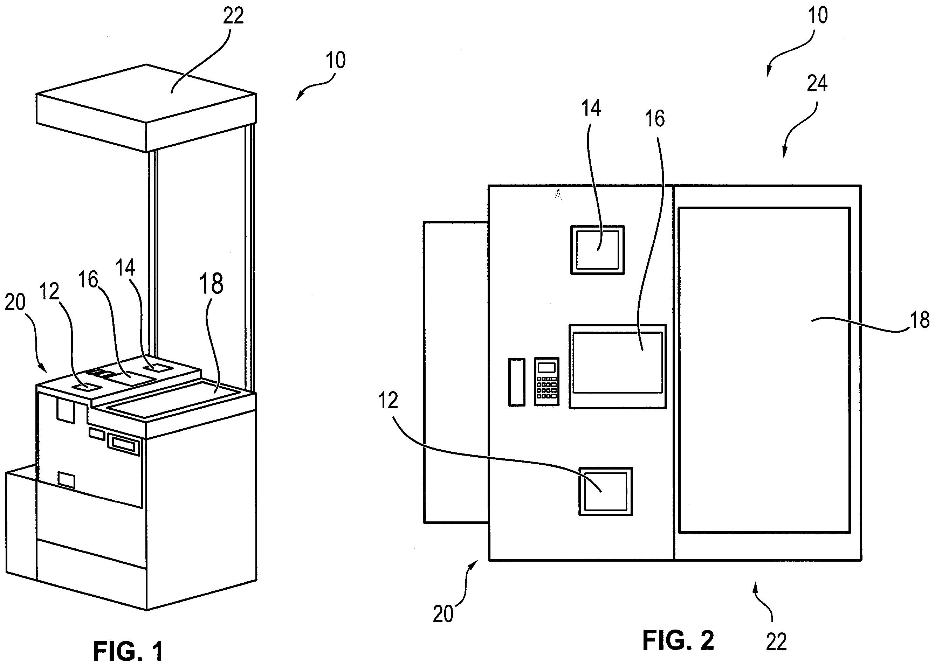

In Figur 1 ist eine schematische, perspektivische Darstellung eines Kassensystems 10 gezeigt. Figur 2 zeigt eine Draufsicht auf ein Bedienfeld 20 dieses Kassensystems 10.

Das Kassensystem 10 umfasst einen ersten Scanner 12 und einen zweiten Scanner 14 zum Erfassen von ausgesuchten Waren, einen Touchscreen 16, über den Informationen an die das Kassensystem bedienende Person angezeigt werden können, sowie eine als Packmulde 18 ausgebildete Ablageeinheit zur Ablage der gescannten Waren.

Das in den Figuren 1 und 2 gezeigte Kassensystem 10 ist als ein beidseitig bedienbares Kassensystem 10 ausgebildet. So dient der erste Scanner 12 zum Erfassen von Waren durch einen an der ersten Seite 22 des Kassensystems 10 angeordneten Kunden und der zweite Scanner 14 zum Erfassen von Waren durch einen an der der ersten Seite 22 gegenüberliegenden zweiten Seite 24 des Kassensystems 10 befindlichen Kassierer bzw. Kassiererin. Bei einer alternativen Ausführungsform kann das Kassensystem 10 auch nur von einer Seite 22, 24 bedienbar sein. In diesem Fall ist insbesondere nur ein Scanner 12, 14 vorgesehen.

Oberhalb des Bedienfeldes 20 ist in einem vorbestimmten Abstand eine Kameraeinheit 22 angeordnet, mit deren Hilfe Bilder von dem Bedienfeld 20 aufgenommen werden können. Die Kameraeinheit 22 umfasst insbesondere eine Wärmebildkamera zur Aufnahme von Wärmebildern mit Abbildungen des Bedienfeldes 20.

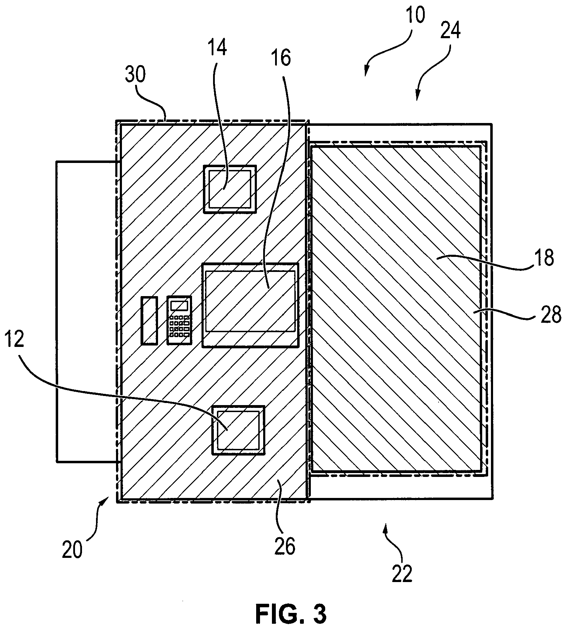

Zum Erfassen der von ihm ausgewählten Waren bewegt die Bedienperson eine Ware nach der anderen über den ersten Scanner 12 und legt die Ware anschließend in der Packmulde 18 ab. Nachdem sie alle von ihr ausgesuchten Waren eingescannt hat, bestätigt sie dies über den Touchscreen 16 und bezahlt anschließend den fälligen Gesamtbetrag. Um den gesamten Bedienvorgang für den Kunden möglichst einfach und komfortabel zu gestalten und auf der anderen Seite dennoch eine möglichst hohe Sicherheit für den das Kassensystem 10 betreibenden Händler zu gewährleisten, sind, wie in Figur 3 dargestellt, zwei Felder 26, 28 mit Hilfe von Doppellichtschrankenanordnungen, von denen eine beispielhaft mit dem Bezugszeichen 30 bezeichnet ist, umgeben. Das erste Feld 26 umschließt hierbei die beiden Scanner 12, 14 und den Touchscreen 16. Die Doppellichtschrankenanordnungen 30 des zweiten Feldes 28 dagegen umschließen die Packmulde 18. Bei einer alternativen Ausführungsform kann das erste Feld 26 auch lediglich den ersten Scanner 12 umschließen.

Unter einer Doppellichtschrankenanordnung 30 wird im Rahmen dieser Anmeldung verstanden, dass die Lichtstrahlen zweier Lichtschrankenanordnungen parallel zueinander in einem vorbestimmten Abstand geführt sind, sodass eine Bewegungsrichtung sich von durch die Doppellichtschrankenanordnung hindurch bewegten Waren ermitteln lässt. Insbesondere sind die Doppellichtschrankenanordnung 30 jeweils als zwei parallel zueinander verlaufende Lichtschrankenvorhänge ausgebildet. Unter einem Lichtschrankenvorhang wird insbesondere eine Vielzahl innerhalb einer Ebene verlaufenden Lichtschranken verstanden, deren Lichtschranken derart dicht zueinander verlaufen, dass keine üblicherweise zu bezahlenden Waren durch den Lichtschrankenvorhang hindurchgeführt werden können, ohne dass zumindest eine der Lichtschranken des Lichtschrankenvorhangs unterbrochen wird. Die beiden Lichtschrankenvorhänge einer Doppellichtschrankenanordnung sind hierbei parallel zueinander angeordnet.

Mit Hilfe der beiden durch die Doppellichtschrankenanordnung 30 begrenzenden Felder 26, 28 kann auf einfache Weise jeweils bestimmt werden, ob ein Gegenstand dem jeweiligen Feld zugeführt oder entnommen wird. Durch die gleichzeitige Aufnahme eines Wärmebildes über die in der Kameraeinheit 22 angeordnete Wärmebildkamera kann ermittelt werden, ob es sich bei diesem Gegenstand um ein Körperteil der Bedienperson, z. B. die Hand, handelt, oder ob es sich um eine Ware handelt. Wird ermittelt, dass es sich lediglich um ein Körperteil handelt, ist dies für den zu erfassenden Warenfluss nicht relevant und wird hierfür nicht berücksichtigt.

Die Packmulde 18 umfasst eine Waage, mit deren Hilfe das Gewicht aller sich in der Packmulde 18 befindenden Waren mit hoher Genauigkeit ermittelt werden kann. Hierüber kann die Hinzugabe und die Wegnahme von Artikel artikelgenau ermittelt werden. Zusätzlich kann diese Waage auch als Fruchtwaage zum Wiegen von Früchten und anderen Waren mit gewichtsabhängigen Preisen genutzt werden.

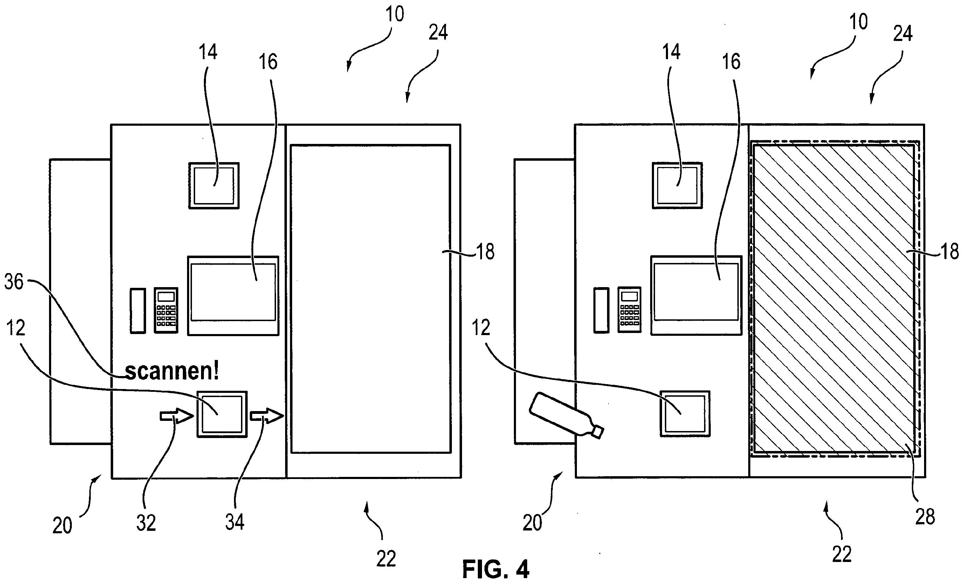

Im Folgenden wird im Zusammenhang mit den Figuren 4 bis 9 anhand von mehreren Betriebszustanden aufgezeigt, wie mit Hilfe der Doppellichtschrankenanordnungen 30 und den anderen Sensoren 22 anhand des Bewegungsablaufs der Bedienperson erkannt wird, welche Handlung die Bedienperson beabsichtigt und in Abhängigkeit dieser die entsprechende Kassenfunktion automatisch durch das Kassensystem 10 ausgeführt wird.

In Figur 4 ist der Betriebszustand des Kassensystems 10 vor dem Erfassen eines Artikels gezeigt. Über den Touchscreen 16 wird der Bedienperson Anweisung "Scannen Sie einen Artikel und legen Sie ihn in die Packmulde" angezeigt. Die Lichtschranken 30 beider Felder 16, 18 sind in diesem Fall noch nicht unterbrochen. Mit Hilfe des Pfeiles 33 und dem Schriftzug 36 "scan!" wird die Bedienperson bei der Bedienung des Kassensystems 10 unterstützt. Die Pfeile 33, 34 sowie der Schriftzug 36 sind hierbei insbesondere als beleuchtbare Elemente in dem Bedienfeld 20 des Kassensystems 10 ausgebildet und werden wahlweise beleuchtet, sodass der Kunde die Zeichen 32 bis 36 als Anweisung wahrnimmt.

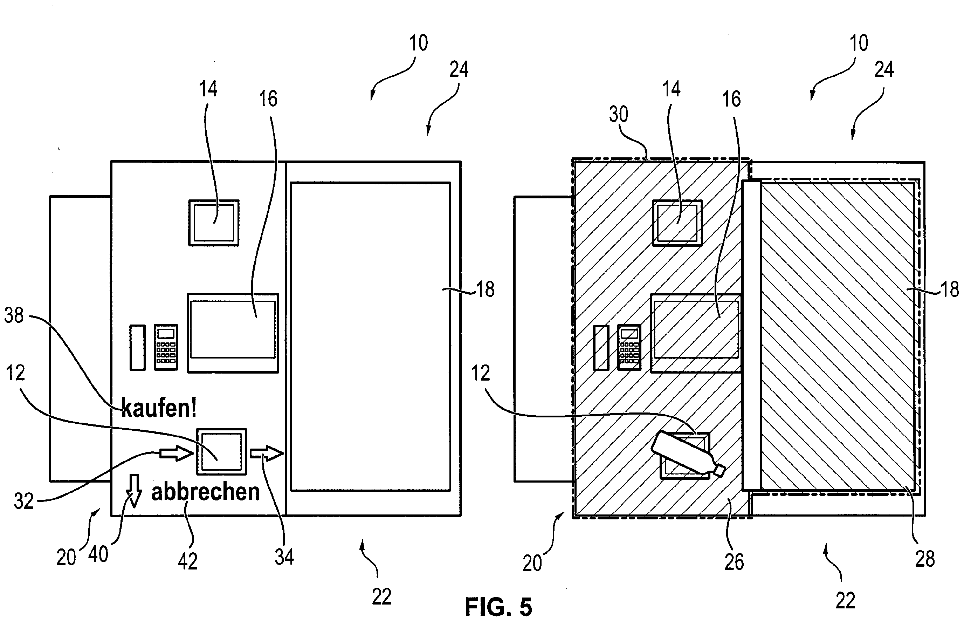

In Figur 5 ist der Betriebszustand dargestellt, nachdem der Kunde die Ware gescannt hat, diese aber noch nicht aus dem ersten Feld 26 entfernt hat. Durch das Unterbrechen der Lichtschranken 30 des ersten Feldes 20 vor dem Zuführen, konnte das Zuführen der Ware in das erste Feld 20 zum Scannen ermittelt werden. Solange wie die Lichtschranken 30 des ersten Feldes 26 nicht erneut durchbrochen werden, muss sich die Ware nach wie vor im ersten Feld 26 befinden. Nach dem Scannen wird nun der Pfeil 34 zusammen mit dem Schriftzug "buy!" 38 angezeigt. Zusätzlich werden ein Pfeil 40, der zur Bedienperson hingerichtet ist und der Schriftzug 42 "cancel" angezeigt wird. Somit werden der Bedienperson zwei mögliche Bedienoptionen angezeigt. Zum richtigen Ablegen der Ware zum Kauf der Ware muss diese entsprechend des Pfeils 34 der Packmulde 18 zugeführt werden. Möchte die Bedienperson dagegen die Ware stornieren, bewegt sie diese einfach zu sich hinaus in Richtung des Pfeils 40. Durch die Lichtschranken 30 kann das Kassensystem 10 erfassen, welche dieser beiden Bewegungsabläufe die Bedienperson wählt. Bewegt die Bedienperson die erfasste Ware nach rechts von dem ersten Feld 26 in das zweite Feld 28 werden zunächst die Doppellichtschranken 30 des ersten Feldes 26 und an die Doppelschranken 30 des zweiten Feldes 28 durchbrochen. In diesem Fall erkennt das Kassensystem 10 diesen Bewegungsablauf und weiß, dass die Bedienperson den Artikel kaufen möchte und verrechnet ihn entsprechend.

Entnimmt die Bedienperson dagegen den Artikel aus dem ersten Feld 26 zu sich hin, wird dies entsprechend durch die Lichtschranken 30 des ersten Feldes 26 detektiert. Die Steuereinheit des Kassensystems 10 legt diesen Bewegungsablauf der Bedienperson entsprechend der Anzeige als Stornierung des zuletzt erfassten Artikels aus.

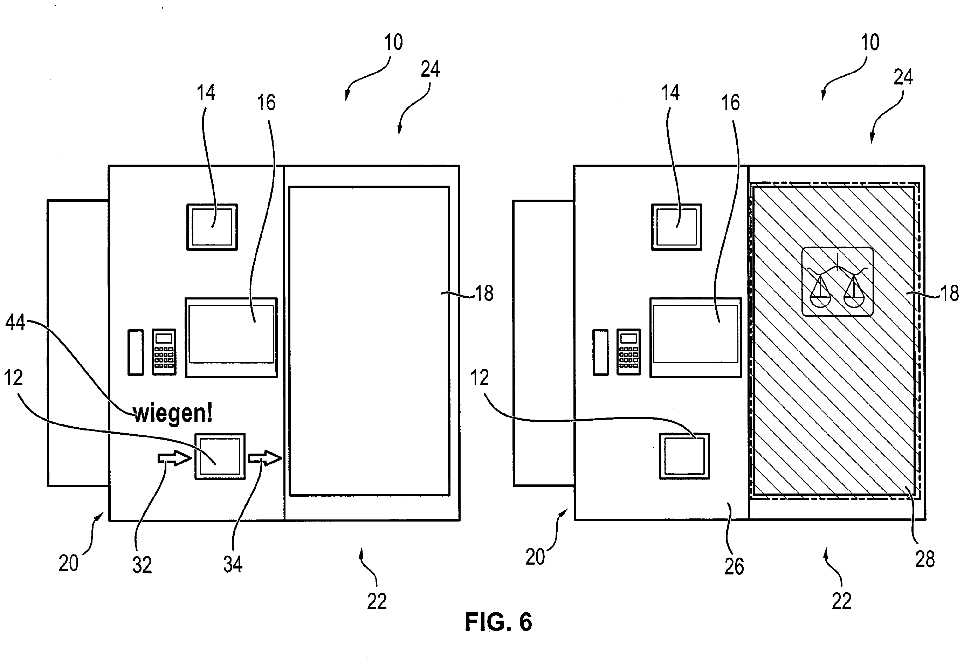

In Figur 6 wird der Betriebszustand dargestellt, wenn der bei dem Betriebszustand in Figur 4 gescannte Artikel ein Artikel mit einem gewichtsabhängigen Preis ist. In diesem Fall wird der Kunde dazu aufgefordert, den Artikel zum Wiegen und somit zur Preiskalkulation in die Ablagemulde 18 zu legen. Hierzu wird zum einen eine entsprechende Anweisung auf dem Touchscreen 16 angezeigt. Zum anderen wird der Pfeil 34,der zur Packmulde 18 zeigt, angezeigt und ferner ein Schriftzug 44 "weight!" dargestellt, um den Kunden entsprechend zu führen. Folgt der Kunde diesen Anweisungen, und legt den Artikel in der Packmulde 18 ab, so wird dieses über die Lichtschranken 30 der Felder 26, 28 wahrgenommen und der Preis in Abhängigkeit des Gewichts ermittelt. Erfolgt jedoch keine Ablage der Ware in der Packmulde 18, wird die Bedienperson über den Touchscreen 16 hierüber informiert und aufgefordert, eine Zurücktaste, die über den Touchscreen 16 angezeigt wird, zu betätigen.

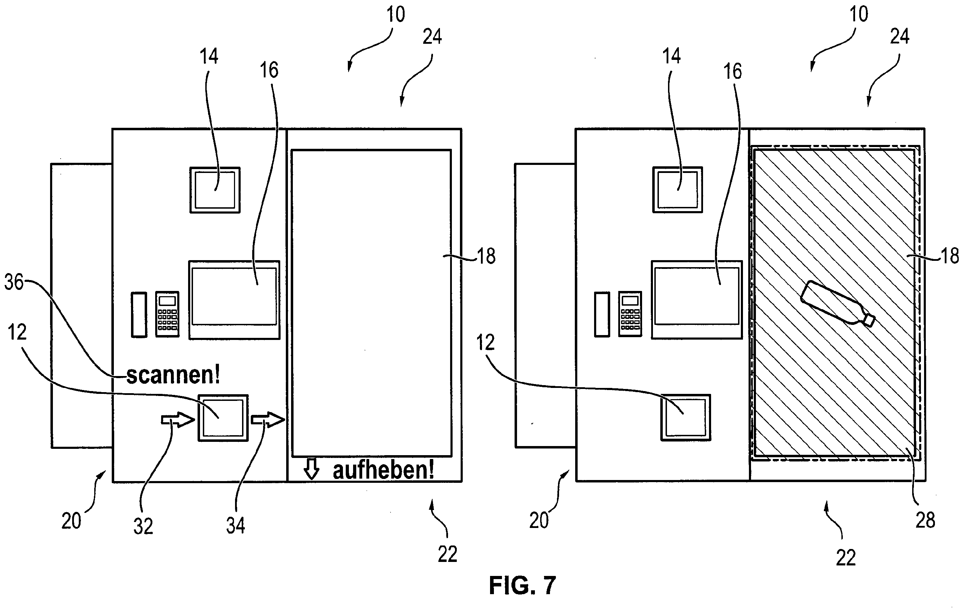

In Figur 7 ist das Kassensystem 10 in dem Betriebszustand dargestellt, nachdem ein Artikel gescannt und ordnungsgemäß in der Packmulde 18 abgelegt wurde. Über den Touchscreen 16 wird der Kunde aufgefordert, nur den nächsten Artikel zu scannen. Entsprechend wird der Pfeil 33 und der Schriftzug 36 angezeigt. Erfolgt statt dem Scannen des nächsten Artikels die Entnahme eines Artikels aus der Packmulde 18, wird dies durch die entsprechenden Lichtschranken des zweiten Feldes 28 detektiert. Über die Waage der Packmulde 18 kann genau ermittelt werden, welcher Artikel entnommen wurde. Der entnommene Artikel wird entsprechend storniert und vom zu zahlenden Zwischenbetrag abgezogen.

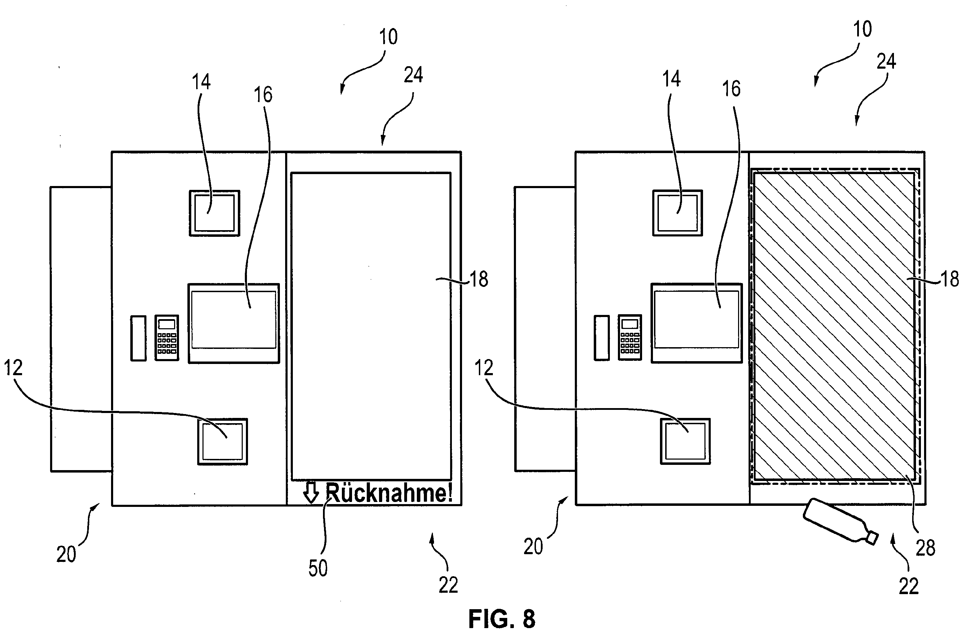

In Figur 8 ist ein Betriebszustand dargestellt, bei dem ein Artikel der Packmulde 18 zugeführt wird, ohne vorher gescannt zu werden. Dies kann durch die Lichtschranken 30 einfach ermittelt werden, in dem der Artikel lediglich durch die Lichtschranken 30 des zweiten Feldes 28, aber nicht durch das erste Feld 26 geführt wurde. In diesem Fall wird über den Touchscreen 16 dem Kunden eine Anzeige angezeigt, die ihn darüber informiert, dass der Artikel nicht erfasst wurde und ihn auffordert ihn aus der Packmulde 18 zu nehmen. Hierzu werden in diesem Fall der Pfeil 50 und der Schriftzug "return!" angezeigt. Die Artikelentnahme wird anschließend wieder über das Gewicht der Packmulde 18 überwacht.

Insgesamt ermöglicht die zuvor beschriebene Erfassung der Bewegungsabläufe des Kassensystems 10 und die automatische Steuerung des Kassensystems, in Abhängigkeit der ermittelten Bewegungsabläufe, eine intuitive Steuerung des Kassensystems 10 durch den Kunden und eine sichere zuverlässige Erfassung von Waren.

### Bezugszeichenliste

- 10: Kassensystem
- 12, 14: Scanner
- 16: Touchscreen
- 18: Packmulde
- 20: Bedienfeld
- 22: Kameraeinheit
- 24, 26: Seite
- 26, 28: Feld
- 30: Doppellichtschrankenanordnung
- 32, 34, 40, 50: Pfeil
- 36, 38, 44: Schriftzug

## Patentansprüche

1. Kassensystem,
mit einem Scanner (12, 14) zum Erfassen von ausgewählten Waren durch eine Bedienperson des Kassensystems (10), und
mit einer Ablageeinheit (18) zur Ablage von erfassten Waren,
wobei eine Sensoreinheit (22, 30) zum Erfassen eines Bewegungsablaufs der Bedienperson vorgesehen ist, und wobei eine Steuereinheit des
Kassensystems (10) in Abhängigkeit des mit Hilfe der Sensoreinheit (22, 30) erfassten Bewegungsablaufs eine von mehreren voreingestellten Kassenfunktionen auswählt und das Kassensystem (10) entsprechend der ausgewählten Kassenfunktion ansteuert und **dadurch gekennzeichnet,**
**dass** die Sensoreinheit (22, 30) mindestens eine Doppellichtschranke (30) umfasst,
wobei der Scanner (12, 14) durch eine erste Doppellichtschrankenanordnung (30) umgeben ist, die ein erstes Feld (26) umschließt, in dem zumindest der Scanner (12, 14) angeordnet ist, und wobei die Ablageeinheit (18) durch eine zweite Doppellichtschrankenanordnung (30) umschlossen ist, die ein zweites Feld (28) umschließt, in dem zumindest die Ablageeinheit (18) angeordnet ist.

2. Kassensystem (10) nach Anspruch 1, **dadurch gekennzeichnet, dass** in einem Speicherelement der Steuereinheit eine Vielzahl möglicher Bewegungsabläufe gespeichert ist, dass jedem dieser möglichen Bewegungsabläufe eine Kassenfunktion zugeordnet ist, dass die Steuereinheit den mit Hilfe der Sensoreinheit ermittelten Bewegungsablauf mit den gespeicherten möglichen Bewegungsabläufen vergleicht, in Abhängigkeit des Vergleiches einen der möglichen Bewegungsabläufe auswählt und die zugeordnete Kassenfunktion ausführt.

3. Kassensystem (10) nach Anspruch 1 oder 2, **dadurch gekennzeichnet, dass** die Sensoreinheit (22, 30) mindestens eine Kamera (22) zur Aufnahme eines Bildes eines Bedienbereiches (20) des Kassensystems (10) umfasst.

4. Kassensystem (10) nach einem der vorhergehenden Ansprüche, **dadurch gekennzeichnet, dass** die Sensoreinheit (22, 30) mindestens eine Wärmebildkamera (22) zur Aufnahme eines Wärmebildes eines Bedienbereiches (20) des Kassensystems umfasst.

5. Kassensystem (10) nach Anspruch 4, **dadurch gekennzeichnet, dass** die Steuereinheit mit Hilfe des Wärmebildes erfasste Gegenstände in Körperteile der Bedienperson und andere Gegenstände, insbesondere Waren, klassifiziert.

6. Kassensystem (10) nach einem der Ansprüche 3 bis 5, **dadurch gekennzeichnet, dass** der Scanner (12, 14) und/oder die Ablageeinheit (18) innerhalb des erfassten Bedienbereiches (20) angeordnet sind.

7. Kassensystem (10) nach einem der vorhergehenden Ansprüche, **dadurch gekennzeichnet, dass** die erste Doppellichtschrankenanordnung (30) und/oder die zweite Doppellichtschrankenanordnung (30) jeweils zwei Lichtschrankenanordnungen umfassen, deren Strahlen in einem vorbestimmten Abstand zueinander parallel verlaufen.

8. Kassensystem (10) nach einem der vorhergehenden Ansprüche, **dadurch gekennzeichnet, dass** die Steuereinheit mit Hilfe der Doppelschrankenanordnungen (30) ein Zuführen und Entnehmen von Waren aus den Feldern (26, 28) ermittelt, und dass die Steuereinheit in Abhängigkeit der Zuführ- und/oder Entnahmereihenfolge einen Bewegungsablauf ermittelt.

9. Kassensystem (10) nach einem der vorhergehenden Ansprüche, **dadurch gekennzeichnet, dass** die Steuereinheit mit Hilfe der Doppellichtschrankenanordnungen (30) eine Bewegungsrichtung ermittelt.

10. Kassensystem (10) nach einem der vorhergehenden Ansprüche, **dadurch gekennzeichnet, dass** die Sensoreinheit (22, 30) eine Waage zur Ermittlung des Gewichtes der in der Ablageeinheit (18) aufgenommenen Waren umfasst.

11. Kassensystem (10) nach Anspruch 10, **dadurch gekennzeichnet, dass** die Waage auch als Waage zum Ermitteln des Gewichtes von Waren mit gewichtsabhängigen Preisen dient.

12. Kassensystem (10) nach einem der vorhergehenden Ansprüche, **dadurch gekennzeichnet, dass** das Kassensystem (10) ein Kundenführungssystem (16, 32 bis 50) zur Führung des Bewegungsablaufes einer Bedienperson umfasst.

13. Kassensystem (10) nach Anspruch 11, **dadurch gekennzeichnet, dass** das Kundenführungssystem (16, 32 bis 50) einen Bildschirm (16) zur Anzeige von Informationen, insbesondere Anweisungen, an die Bedienperson und/oder wahlweise beleuchtbare Symbole (32 bis 50), beispielsweise Pfeile, Schriftzeichen und/oder Linien, zur Anzeige möglicher Bewegungsablaufalternativen umfasst.

## Claims

1. Checkout system,
having a scanner (12, 14) for the scanning of selected goods by an operator of the checkout system (10), and
having a storage unit (18) for storing scanned goods,
wherein a sensor unit (22, 30) is provided for sensing a movement sequence of the operator, and wherein a control unit of the checkout system (10) selects one of a plurality of preset checkout functions in accordance with the movement sequence sensed using the sensor unit (22, 30) and actuates the checkout system (10) in accordance with the selected checkout function, and **characterized**
**in that** the sensor unit (22, 30) comprises at least one double photoelectric barrier (30),
wherein the scanner (12, 14) is surrounded by a first double photoelectric barrier arrangement (30) which encloses a first field (26) in which at least the scanner (12, 14) is arranged, and wherein the storage unit (18) is surrounded by a second double photoelectric barrier arrangement (30) which encloses a second field (28) in which at least the storage unit (18) is arranged.

2. Checkout system (10) according to Claim 1, **characterized in that** a multiplicity of possible movement sequences are stored in a memory element of the control unit, **in that** each of these possible movement sequences is assigned a checkout function, **in that** the control unit compares the movement sequence determined using the sensor unit with the stored possible movement sequences, selects one of the possible movement sequences as a function of the comparison, and carries out the assigned checkout function.

3. Checkout system (10) according to Claim 1 or 2, **characterized in that** the sensor unit (22, 30) comprises at least one camera (22) for recording an image of an operator control area (20) of the checkout system (10).

4. Checkout system (10) according to one of the preceding claims, **characterized in that** the sensor unit (22, 30) comprises at least one thermal imaging camera (22) for recording a thermal image of an operator control area (20) of the checkout system.

5. Checkout system (10) according to Claim 4, **characterized in that** the control unit classifies objects which are recorded using the thermal image into body parts of the operator and other objects, in particular goods.

6. Checkout system (10) according to one of Claims 3 to 5, **characterized in that** the scanner (12, 14) and/or the storage unit (18) are arranged inside the registered operator control area (20).

7. Checkout system (10) according to one of the preceding claims, **characterized in that** the first double photoelectric barrier arrangement (30) and/or the second double photoelectric barrier arrangement (30) each comprise two photoelectric barrier arrangements whose beams run in parallel with one another at a predetermined distance.

8. Checkout system (10) according to one of the preceding claims , **characterized in that** the control unit determines the feeding in and removal of goods from the fields (26, 28) using the double photoelectric barrier arrangements (30), and **in that** the control unit determines a movement sequence as a function of the feed sequence and/or removal sequence.

9. Checkout system (10) according to one of the preceding claims, **characterized in that** the control unit determines a movement direction using the double photoelectric barrier arrangements (30) .

10. Checkout system (10) according to one of the preceding claims, **characterized in that** the sensor unit (22, 30) comprises a balance for determining the weight of the goods held in the storage unit (18) .

11. Checkout system (10) according to Claim 10, **characterized in that** the balance also serves as a balance for determining the weight of goods with weight-dependent prices.

12. Checkout system (10) according to one of the preceding claims, **characterized in that** the checkout system (10) comprises a customer guidance system (16, 32 to 50) for guiding the movement sequence of an operator.

13. Checkout system (10) according to Claim 11, **characterized in that** the customer guidance system (16, 32 to 50) comprises a screen (16) for displaying information, in particular instructions, to the operator and/or symbols (32 to 50) which can be optionally lit up, for example arrows, lettering and/or lines, for displaying possible movement sequence alternatives.

## Revendications

1. Système de caisse
avec un scanner (12, 14) pour saisir des marchandises sélectionnées par un opérateur du système de caisse (10), et
avec une unité de dépôt (18) pour déposer des marchandises saisies,
dans lequel une unité de détection (22, 30) est prévue pour détecter une séquence de mouvements de l'opérateur, et
dans lequel une unité de commande du système de caisse (10) sélectionne, en fonction de la séquence de mouvements saisie à l'aide de l'unité de détection (22, 30), l'une parmi plusieurs fonctions de caisse préréglées et commande le système de caisse (10) conformément à la fonction de caisse sélectionnée, et **caractérisé en ce que** l'unité de détection (22, 30) comprend au moins une double barrière lumineuse (30),
dans lequel le scanner (12, 14) est entouré par un premier dispositif de double barrière lumineuse (30) qui entoure une première zone (26) dans laquelle au moins le scanner (12, 14) est disposé, et dans lequel l'unité de dépôt (18) est entourée par un deuxième dispositif de double barrière lumineuse (30) qui entoure une deuxième zone (28) dans laquelle au moins l'unité de dépôt (18) est disposée.

2. Système de caisse (10) selon la revendication 1, **caractérisé en ce que**, dans un élément de stockage de l'unité de commande, une pluralité de séquences de mouvements possibles sont stockées en mémoire, qu'à chacune de ces séquences de mouvements possibles une fonction de caisse est associée, que l'unité de commande compare la séquence de mouvements déterminée à l'aide de l'unité de détection avec les séquences de mouvements possibles stockées en mémoire, sélectionne en fonction de la comparaison l'une des séquences de mouvements possibles et exécute la fonction de caisse associée.

3. Système de caisse (10) selon la revendication 1 ou 2, **caractérisé en ce que** l'unité de détection (22, 30) comprend au moins une caméra (22) pour la prise d'une image d'une zone de commande (20) du système de caisse (10).

4. Système de caisse (10) selon l'une des revendications précédentes, **caractérisé en ce que** l'unité de détection (22, 30) comprend au moins une caméra thermique (22) pour la prise d'une image thermique d'une zone de commande (20) du système de caisse.

5. Système de caisse (10) selon la revendication 4, **caractérisé en ce que** l'unité de commande classe des objets saisis à l'aide de l'image thermique en parties de corps de l'opérateur et d'autres objets, en particulier des marchandises.

6. Système de caisse (10) selon l'une des revendications 3 à 5, **caractérisé en ce que** le scanner (12, 14) et/ou l'unité de dépôt (18) sont disposés à l'intérieur de la zone de commande (20) saisie.

7. Système de caisse (10) selon l'une des revendications précédentes, **caractérisé en ce que** le premier dispositif de double barrière lumineuse (30) et/ou le deuxième dispositif de double barrière lumineuse (30) comprennent respectivement deux dispositifs de barrière lumineuse dont les rayons se propagent parallèlement entre eux à une distance prédéfinie.

8. Système de caisse (10) selon l'une des revendications précédentes , **caractérisé en ce que** l'unité de commande détermine, à l'aide des dispositifs de double barrière lumineuse (30), une amenée de marchandises dans les zones (26, 28) et un prélèvement de marchandises de celles-ci, et que l'unité de commande détermine, en fonction de l'ordre d'amenée et/ou de prélèvement, une séquence de mouvements.

9. Système de caisse (10) selon l'une des revendications précédentes, **caractérisé en ce que** l'unité de commande détermine, à l'aide des dispositifs de double barrière lumineuse (30), une direction de mouvement.

10. Système de caisse (10) selon l'une des revendications précédentes, **caractérisé en ce que** l'unité de détection (22, 30) comprend une balance pour déterminer le poids des marchandises réceptionnées dans l'unité de dépôt (18).

11. Système de caisse (10) selon la revendication 10, **caractérisé en ce que** la balance sert également de balance pour déterminer le poids de marchandises avec des prix en fonction du poids.

12. Système de caisse (10) selon l'une des revendications précédentes, **caractérisé en ce que** le système de caisse (10) comprend un système de guidage de client (16, 32 à 50) pour le guidage de la séquence de mouvements d'un opérateur.

13. Système de caisse (10) selon la revendication 11, **caractérisé en ce que** le système de guidage de client (16, 32 à 50) comprend un écran (16) pour afficher des informations, en particulier des consignes, pour l'opérateur et/ou des symboles (32 à 50) pouvant être éclairés au choix, par exemple des flèches, des caractères et/ou des lignes, pour afficher des variantes de séquences de mouvements possibles.
